# EUROPEAN PATENT APPLICATION

(11) **EP 4 821 716 A1**
(43) Date of publication of application: **14.10.2026**
(21) Application number: 25767465.5
(22) Date of filing: 07.03.2025
(51) Int. Cl.: B60J 7/00

(54) **SUNSHADE CURTAIN GUIDE RAIL AND ASSEMBLY METHOD THEREFOR**

(30) Priority: 08.03.2024 CN 202410267363
(71) Applicant: Fuyao Glass Industry Group Co., Ltd., Fuqing, Fujian 350300 (CN)
(72) Inventor: WU, Yue, Fuqing, Fujian 350300 (CN); YANG, Yang, Fuqing, Fujian 350300 (CN); ZHANG, Heng, Fuqing, Fujian 350300 (CN); YU, Jianzhao, Fuqing, Fujian 350300 (CN); LIU, Xianping, Fuqing, Fujian 350300 (CN); LIN, Xiang, Fuqing, Fujian 350300 (CN)
(74) Representative: Patentanwälte Olbricht Buchhold Keulertz
(86) International application number: PCT/CN2025/081182
(87) International publication number: WO 2025/185725

(57) **Abstract**

The present disclosure discloses a sunshade guide rail and an assembly method therefor. The sunshade guide rail includes a guide rail body extending in a longitudinal direction. The guide rail body has an inner side and an outer side opposite to each other in a first direction on a cross section thereof. A first running track and a second running track for mounting a timing belt are provided on the guide rail body at a position close to the outer side of the guide rail body. The first running track and the second running track are vertically spaced apart in a second direction perpendicular to the first direction. A third running track for mounting a sunshade edge strip is provided on the guide rail body at a position close to the inner side of the guide rail body. A guide structure for mounting a slider is formed in the guide rail body. The guide structure includes a limiting portion for limiting the slider in the first direction. The present disclosure is adaptable to direct-drive sunshades, and achieves a simple overall structure, high assembly efficiency and high operational reliability.

## Description

### RELATED APPLICATION

The present disclosure claims priority Chinese Application No. 202410267363.5 filed on March 8, 2024, which is hereby incorporated by reference in its entirety.

### TECHNICAL FIELD

The present disclosure relates to the technical field of sunroof structures, and particularly to a sunshade guide rail and an assembly method therefor.

### BACKGROUND

Automobile sunroofs can effectively promote air circulation inside the automobile, allowing more fresh air to enter and providing passengers with a healthy and comfortable experience. Meanwhile, automobile sunroofs can also broaden the field of view. Compared with conventional automobile sunroofs, the currently popular panoramic sunroofs have a relatively large area, which can further improve the openness of the view at the top of the automobile, and significantly increase the amount of light entering the automobile's interior. To address the issue of sun shading, the existing panoramic sunroofs with an opening function are generally equipped with a sunshade.

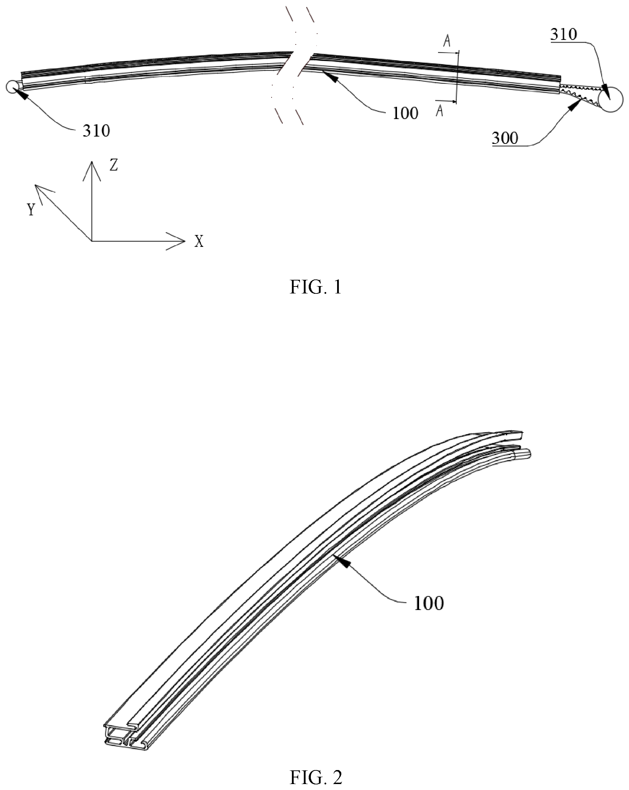

At present, the guide rail serves as a key component in existing rear sunroof sunshades of automobiles. As illustrated in FIGS. 1 and 2, the structure of conventional guide rails generally includes an edge strip running track, a slider running track, a flexible shaft retracting running track, and a mounting surface for bolt fastening. The above structure enables the slider to slide along the guide rail.

The existing guide rail structure can only meet the requirements of conventional sunshades with flexible shafts, and is incompatible with the new application structure of direct-drive sunshades.

Therefore, it is necessary to provide a sunshade guide rail adapted for direct-drive sunshades.

### SUMMARY

In view of the defects in the prior art, the embodiments of the present disclosure provide a sunshade guide rail and an assembly method for, which are adapted to a direct-drive sunshade. The sunshade guide rail achieves a simple overall structure, high assembly efficiency and high operational reliability.

The specific technical solutions of the embodiments of the present disclosure are as follows.

A sunshade guide rail, including a guide rail body extending in a longitudinal direction, the guide rail body having an inner side and an outer side opposite to each other in a first direction on a cross section thereof. A first running track and a second running track for mounting a timing belt are provided on the guide rail body at a position close to the outer side of the guide rail body. The first running track and the second running track are vertically spaced apart in a second direction perpendicular to the first direction. A third running track for mounting a sunshade edge strip is provided on the guide rail body at a position close to the inner side of the guide rail body. A guide structure for mounting a slider is formed in the guide rail body, and the guide structure includes a limiting portion for limiting the slider in the first direction.

An assembly method for a sunshade guide rail, which is applied to the sunshade guide rail according to any one of claims 1 to 13. The assembly method for the sunshade guide rail includes:
disposing a pre-fixing portion at a predetermined position on the sunshade guide rail, and pre-assembling a glass with the sunshade guide rail; and
injecting an adhesive into a predetermined assembly gap formed between the glass and the sunshade guide rail, in which the adhesive forms a predetermined adhesive structure.

The technical solutions of the present disclosure achieve the following remarkable advantageous effects.

The present disclosure provides a brand-new sunshade guide rail. When the sunshade guide rail is assembled and fixed to the glass, pre-fixing can be achieved by means of a pre-fixing portion (e.g., a double-sided adhesive tape), followed by pouring an adhesive (e.g., PU adhesive) to complete the fixation of the guide rail to the glass. Compared with the existing fixing method of fastening with screws into embedded nuts, the overall structure is simpler and the assembly efficiency is higher.

Through an ingenious structural design, the guide rail body of the sunshade guide rail is provided with a first running track and a second running track for mounting the timing belt, a third running track for mounting the sunshade edge strip, and a guide groove for mounting the slider, thereby satisfying the functional requirements of a direct-drive sunshade.

Specific embodiments of the present disclosure are disclosed in detail with reference to the following description and drawings, to indicate the ways in which the principles of the present disclosure can be employed. It shall be understood that the scope of the embodiments of the present disclosure is not limited thereto. The embodiments of the present disclosure include many variations, modifications and equivalents within the spirit and scope of the appended claims. Features described and/or illustrated with respect to one embodiment may be used in one or more other embodiments in the same or similar manner, and combined with or replacing features of other embodiments.

### BRIEF DESCRIPTION OF THE DRAWINGS

The drawings described here are for illustrative purposes only and are not intended to limit the scope of the present disclosure in any way. In addition, the shapes, proportional dimensions, etc., of the components in the drawings are merely schematic, intended to facilitate understanding of the present disclosure, rather than specifically defining the shapes and proportional dimensions of the components of the present disclosure. Those skilled in the art may, under the teachings of the present disclosure, select various possible shapes and proportional dimensions according to actual conditions to implement the present disclosure.
FIG. 1 illustrates a structural view of a sunshade guide rail according to an embodiment of the present disclosure;
FIG. 2 illustrates a structural view of a guide rail body of a sunshade guide rail according to an embodiment of the present disclosure;
FIG. 3 illustrates a cross-sectional view taken along line A-A in FIG. 2;
FIG. 4 illustrates a cross-sectional view of a sunshade guide rail according to an embodiment of the present disclosure;
FIG. 5 illustrates a cross-sectional view taken along line B-B in FIG. 4;
FIG. 6 illustrates another cross-sectional view taken along line A-A in FIG. 2;
FIG. 7 illustrates a cross-sectional view of a sunshade guide rail according to an embodiment of the present disclosure;
FIG. 8 illustrates another cross-sectional view of a sunshade guide rail according to an embodiment of the present disclosure;
FIG. 9 illustrates a cross-sectional view showing cooperation between a sunshade guide rail in FIG. 8 and a curtain fabric.

Reference numerals in the present disclosure:
100: guide rail body;
101: first running track;
102: second running track;
103: third running track;
104: limiting groove;
110: partition portion;
111: upper rail surface;
112: lower rail surface;
1121: first bent portion;
113: second bent portion;
122: limiting member;
200: slider;
201: claw;
202: engaging portion;
300: timing belt;
310: pulley;
401: pre-fixing portion;
403: notch;
411: main body layer;
412: extension portion;
500: elastic engaging member;
601: pull rod;
602: edge strip;
603: curtain fabric;
Y: first direction;
Z: second direction;
X: automobile traveling direction.

### DETAILED DESCRIPTION OF THE EMBODIMENTS

The technical solution of the present disclosure will be described in detail below with reference to the drawings and the specific embodiments. It should be understood that these embodiments are for illustrative purposes only and are not intended to limit the scope of the present disclosure. After reading the present disclosure, all equivalent modifications to the present disclosure made by those skilled in the art shall fall within the scope defined by the claims appended hereto.

It shall be noted that when an element is referred to as being "disposed on" another element, it can be directly on the other element or an intervening element may also be present. When an element is considered as being "connected to" another element, it can be directly connected to the other element or an intervening element may also be present. The terms "vertical", "horizontal", "upper", "lower", "left", "right" and similar expressions used herein are for illustrative purposes only and do not represent exclusive embodiments.

Unless otherwise defined, all technical and scientific terms used herein have the same meaning as commonly understood by those skilled in the art to which the present disclosure pertains. The terms used in the specification of the present disclosure are for the purpose of describing specific embodiments only and are not intended to limit the present disclosure. As used herein, the term "and/or" includes any and all combinations of one or more of the associated listed items.

The present disclosure provides a sunshade guide rail and an assembly method therefor, which are adapted for a direct-drive sunshade. The sunshade guide rail achieves a simple overall structure, high assembly efficiency, and high operational reliability.

With reference to FIGS. 1 to 9, embodiments of the present disclosure provide a sunshade guide rail, which may include a guide rail body 100 extending in a longitudinal direction. The guide rail body 100 has an inner side and an outer side opposite to each other in a first direction Y on a cross section thereof. A first running track 101 and a second running track 102 for mounting a timing belt 300 are provided on the guide rail body 100 at a position close to the outer side of the guide rail body 100. The first running track 101 and the second running track 102 are vertically spaced apart in a second direction Z perpendicular to the first direction Y. A third running track 103 for mounting a sunshade edge strip 602 is provided on the guide rail body 100 at a position close to the inner side of the guide rail body 100.

A guide structure for mounting a slider 200 is formed in the guide rail body 100, and the guide structure includes a limiting portion capable of limiting the slider 200 in the first direction Y. The guide structure may be integrally in the form of a guide groove, and the limiting portion may be in the form of a limiting groove 104 or may be cooperatively formed by an internal structure arranged in the guide rail body 100.

In some embodiments, when the limiting portion is in the form of a limiting groove 104, the limiting groove 104 may communicate with at least the third running track 103 and the first running track 101. The limiting groove 104 cooperates with the third running track 103 and the first running track 101 to form a guide groove for mounting the slider 200.

Through ingenious structural design, the guide rail body 100 of the sunshade guide rail incorporates the first running track 101 and the second running track 102 for mounting the timing belt 300, the third running track 103 for mounting the sunshade edge strip 602, and the guide groove for mounting the slider 200, thereby meeting the functional requirements of a direct-drive sunshade.

In embodiments of the present disclosure, the sunshade guide rail may include a guide rail body 100 extending in a longitudinal direction. The extending direction of the guide rail body 100 may vary depending on the curvature of the sunroof in the vehicle models to which it is applied; the present disclosure does not impose any specific limitations in this regard. Generally, the guide rail body 100 extends as a whole along the vehicle traveling direction X.

The guide rail body 100 is an integrally molded structure. Specifically, the guide rail body 100 may be integrally molded by injection molding. When the guide rail body 100 is integrally molded by injection molding, the weight of the guide rail body 100 can be reduced, thereby lowering the manufacturing cost and difficulty of the guide rail body 100.

In an embodiment of the present disclosure, the guide rail body 100 is provided with a first running track 101 and a second running track 102 vertically spaced apart by a partition portion 110. The first running track 101 is configured to mount the slider 200 for driving engagement with the timing belt 300, and the second running track 102 is configured to mount the timing belt 300. The above structure of the guide rail body 100 can cleverly separate the timing belt 300 in the vertical direction, so that the timing belt can operate without mutual interference and respectively satisfy the two deployment modes of the sunshade: upper deployment and lower deployment.

To restrict the movement of the slider 200 in the first direction Y and prevent it from disengaging from the guide rail body 100 during use, the guide rail body 100 is further provided with the limiting groove 104. An engaging portion 202 configured to engage with the limiting groove 104 is disposed at a corresponding position on the slider 200. When the engaging portion 202 of the slider 200 is engaged into the limiting groove 104, the movement of the slider 200 in the first direction Y can be restrained.

The guide rail body 100 is further provided with the third running track 103 for mounting the sunshade edge strip 602. The slider 200 is provided with a hook extending into the third running track 103. The sunshade edge strip 602 may be provided with an edge strip hole. After the hook is engaged with the sunshade through the edge strip hole, the sunshade can be driven to move by the slider 200.

As illustrated in FIG. 1, the guide rail according to embodiments of the present disclosure is applied to a direct-drive sunshade to serve as a sunshade guide rail. During mounting, pulleys 310 (gears) are fixed at front and rear ends of the sunshade guide rail. One side of the timing belt 300 (an open belt or a closed belt) is engaged into an open slot (e.g., C-shaped slot) of the slider 200 and mounted in the first running track 101, and the other side thereof is placed into the second running track 102. An edge strip hole on the sunshade edge strip 602 is inserted onto a fixing post of the timing belt 300, and then inserted into the third running track 103.

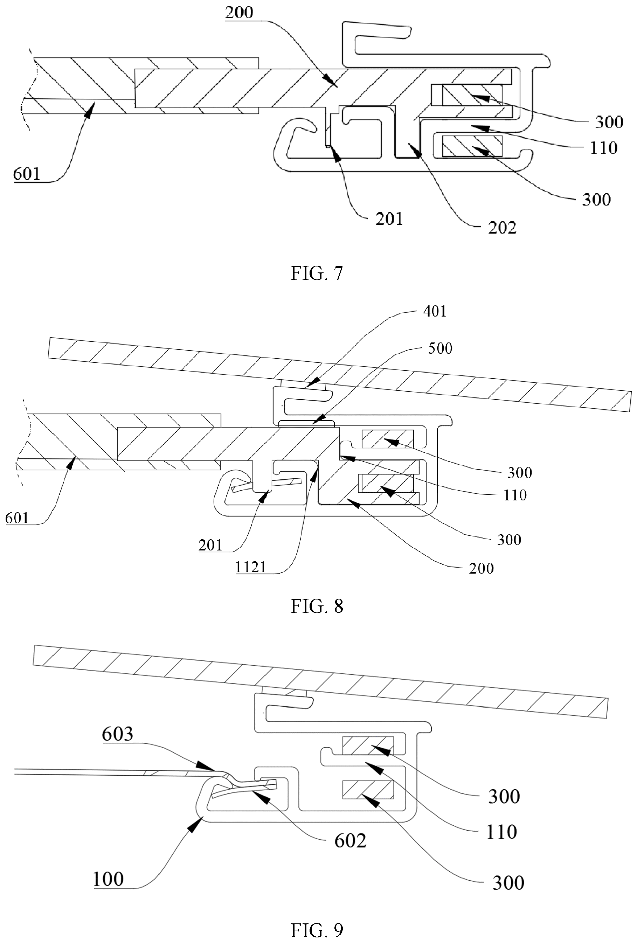

With reference to FIG. 9, when the sunshade needs to be opened or closed, a driving source drives the gears to rotate, the gear movement drives the timing belt 300 to move, the timing belt 300 drives the slider 200 to move, and the slider 200 can drive the edge strip 602 to move, causing the curtain fabric 603 fixed to the edge strip 602 to move, thereby completing the opening and closing of the sunshade. The driving source may be, but not limited to, an electric motor, or may be manually actuated. When manual actuation is employed, the transmission path for opening and closing the sunshade is different from that of the electric motor described above, mainly in that the pull rod drives the slider 200, the slider 200 drives the timing belt 300, and the timing belt 300 drives the gears to rotate.

In embodiments of the present disclosure, the specific mode in which the timing belt 300 drives the slider 200 may be achieved by providing a driving engagement relationship therebetween. Specifically, the slider 200 is provided with an engaging portion 202 engaged with the timing belt 300, and the engaging portion 202 is in driving engagement with the timing belt 300 within the first running track 101. The first running track 101 accommodates the slider 200 and the timing belt 300, and the second running track 102 accommodates the timing belt 300. In the second direction Z, the first running track 101 is located above or below the second running track 102. In the second direction Z, the track depth of the first running track 101 is greater than that of the second running track 102. The slider 200 is provided with a meshing portion cooperating with the timing belt 300, and the meshing portion is in driving engagement with the timing belt 300 within the first running track 101.

In embodiments of the present disclosure, the guide groove for mounting the slider 200 may be formed by the cooperation of multiple parts to achieve the position limitation of the slider 200. Specifically, the guide groove may be formed by the cooperation of the limiting groove 104, the third running track 103 and the first running track 101. The specific shape and structure of the slider 200 are not specifically limited in the present disclosure.

Generally, the present disclosure provides a sunshade guide rail adapted for a direct-drive sunshade. The sunshade guide rail features a simple overall structure, high assembly efficiency, and high operational reliability.

The present disclosure will be described in detail below with reference to specific drawings and embodiments.

Referring to FIGS. 1, 3, 4 and 5, the present disclosure provides an embodiment of a direct-drive sunshade adopting a lower deployment mode. Referring to FIGS. 1, 2, 6 and 7, the present disclosure provides an embodiment of a direct-drive sunshade adopting an upper deployment mode.

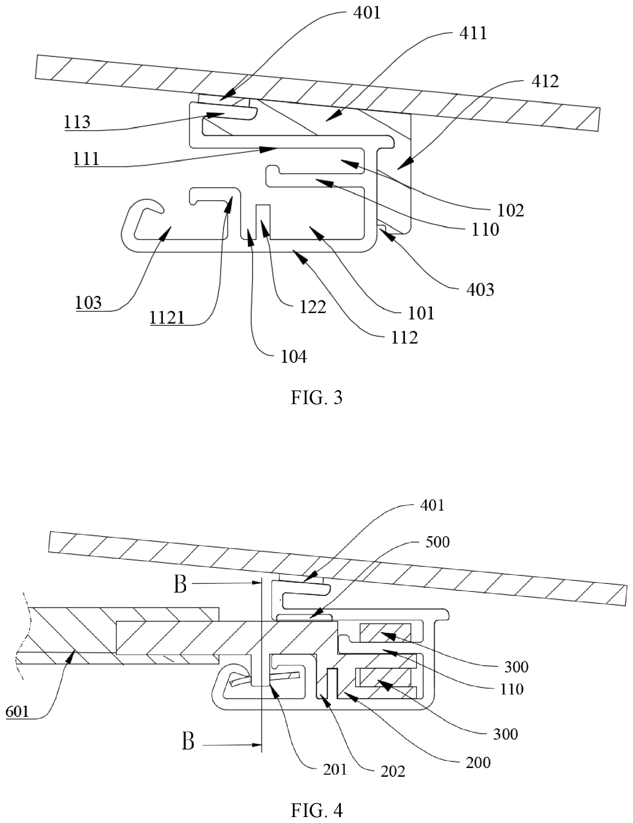

As illustrated in FIGS. 3 and 4, when the sunshade adopts the lower deployment mode, the guide rail body 100 includes an upper rail surface 111 and a lower rail surface 112 opposite to each other in the second direction Z, with a connecting surface disposed therebetween and a partition portion 110 disposed on the connecting surface. The partition portion 110 cooperates with a portion of the connecting surface and a portion of the lower rail surface 112 to form the first running track 101. The partition portion 110 cooperates with a portion of the connecting surface and a portion of the upper rail surface 111 to form the second running track 102.

In this embodiment, the first running track 101 and the second running track 102 may be arranged vertically in the second direction Z. The first running track 101 may be located below the second running track 102, and they are separated by the partition portion 110 to prevent the interference of the timing belt 300. Since the first running track 101 needs to accommodate both the slider 200 and the timing belt 300, and the second running track 102 only accommodates the timing belt 300, the cross-sectional dimension of the first running track 101 (especially the track depth in the second direction Z) is larger than that of the second running track 102.

Generally, the guide rail body 100 has an upper rail surface 111 and a lower rail surface 112 opposite to each other, with a connecting surface connected therebetween, and the three surfaces cooperate to form the main body of the guide rail body. The partition portion 110 is disposed on the connecting surface and located between the upper rail surface 111 and the lower rail surface 112. The partition portion 110 can cooperate with a portion of the connecting surface and a portion of the lower rail surface 112 to form the first running track 101, and the partition portion 110 can also cooperate with a portion of the connecting surface and a portion of the upper rail surface 111 to form the second running track 102.

Specifically, the partition portion 110 may be a baffle with a certain thickness disposed along the longitudinal extension direction of the guide rail body 100. On the cross section of the guide rail body 100, one end of the baffle is connected to a connecting portion, and the other end thereof is bent upward to a certain extent, so as to limit the timing belt 300, whose upper portion is located in the second running track 102.

Of course, the specific shape and structure of the partition portion 110 are not limited to the above examples. Other modifications may be made by those skilled in the art under the teaching of the technical spirit of the present disclosure, and shall fall within the protection scope of the present disclosure as long as the functions and effects achieved thereby are the same as or similar to those of the present disclosure.

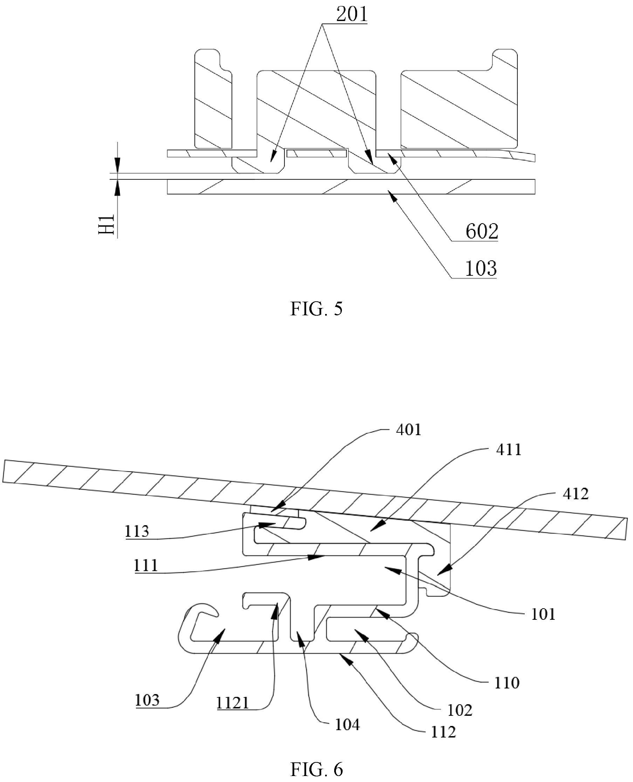

Referring to FIGS. 6 and 7, when the sunshade adopts the upper deployment mode, the guide rail body 100 has an upper rail surface 111 and a lower rail surface 112 opposite to each other in the second direction Z, with a partition portion 110 bent at a predetermined angle disposed between the upper rail surface 111 and the lower rail surface 112. A portion of the partition portion 110 cooperates with the upper rail surface 111 to form the first running track 101, and a portion of the partition portion 110 cooperates with the lower rail surface 112 to form the second running track 102.

In this embodiment, the main difference from the above embodiment is that the first running track 101 may be located above the second running track 102, and they are separated by the partition portion 110 to prevent the interference of the timing belt 300.

Generally, the guide rail body 100 has an upper rail surface 111 and a lower rail surface 112 opposite to each other, with the partition portion 110 bent at a predetermined angle disposed between the upper rail surface 111 and the lower rail surface 112. As illustrated in FIG. 6, specifically, the partition portion 110 includes two bent sections, in which the upper first bent section cooperates with the upper rail surface 111 to form the first running track 101, and the lower second bent section cooperates with the lower rail surface 112 to form the second running track 102.

Specifically, the shapes, structures, and bending angles of the first bent section and the second bent section may be adaptively designed based on the structures of the upper rail surface 111, the lower rail surface 112, the timing belt 300, and the slider 200 that are cooperated with the first and second bent sections, so as to cooperate with the upper rail surface 111 and the lower rail surface 112 to form the running tracks adapted to the timing belt 300 and the slider 200. Of course, the specific shape and structures of the partition portion 110 are not limited to the above examples. Other modifications may be made by those skilled in the art under the teaching of the technical spirit of the present disclosure, and shall fall within the protection scope of the present disclosure as long as the functions and effects achieved thereby are the same as or similar to those of the present disclosure.

In this embodiment, in order to limit the timing belt 300 located in the second running track 102, a distal end of a portion of the lower rail surface 112 that cooperates to form the second running track 102 may be bent upward to a certain extent.

Referring to FIG. 3 or FIG. 6, in an embodiment of the present disclosure, the lower rail surface 112 is provided with a first bent portion 1121, and a portion of the lower rail surface 112 cooperates with the first bent portion 1121 to form the third running track 103.

The first bent portion 1121 and a portion of the lower rail surface 112 may be disposed opposite to each other to form the third running track 103 for mounting the sunshade edge strip 602. The third running track 103, the first running track 101 and the second running track 102 all extend along the longitudinal direction of the guide rail body.

Referring to FIG. 3 or FIG. 6, the limiting groove 104 may be formed in different ways in different embodiments.

As illustrated in FIG. 6, in an embodiment, for example, in an upper deployment scenario, when the partition portion 110 is a structure bent at a predetermined angle, the first bent portion 1121 cooperates with the partition portion 110 and the lower rail surface 112 to form the limiting groove 104.

That is, in the upper deployment scenario, a portion of the partition portion 110 adjacent to the lower rail surface 112 may be disposed opposite to the first bent portion 1121. The first bent portion 1121 cooperates with a portion of the partition portion 110 and the lower rail surface 112 that is located between the first bent portion 1121 and the partition portion 110 to form the limiting groove 104. When engaged into the limiting groove 104, the slider 200 is limited in the first direction Y.

As illustrated in FIG. 3, in another embodiment, for example, in a lower deployment scenario, when the partition portion 110 is disposed on the connecting surface between the upper rail surface 111 and the lower rail surface 112, the lower rail surface 112 is further provided with a limiting member 122, which cooperates with the first bent portion 1121 and the lower rail surface 112 to form the limiting groove 104.

That is, in the lower deployment scenario, the limiting member 122 is disposed on the lower rail surface 112. The limiting member 122 may specifically be a baffle extending along the longitudinal extension direction of the guide rail body 100, and disposed opposite to the first bent portion 1121. The first bent portion 1121 cooperates with the limiting member 122 and the lower rail surface 112 that is located between the first bent portion 1121 and the limiting member 122 to form the limiting groove 104. When engaged into the limiting groove 104, the slider 200 is limited in the first direction Y.

Referring to FIG. 8, in an embodiment, when the partition portion 110 is disposed on the connecting surface between the upper rail surface 111 and the lower rail surface 112, an end portion of the partition portion 110 away from the connecting surface cooperates with the first bent portion 1121 to form the limiting portion.

In this embodiment, the main difference from the embodiment illustrated in FIG. 4 lies in the specific configuration of the limiting portion. In this embodiment, the limiting portion is formed by the cooperation of the partition portion 110 and the first bent portion 1121.

Specifically, the first bent portion 1121 includes a first portion extending in the second direction Z and a second portion extending in the first direction Y. One end of the first portion is connected to the lower rail surface 112 and the other end thereof is connected to the second portion. When the slider 200 is mounted in the guide rail body 100, the end portion of the partition portion 110 can abut against the slider 200, and the first portion of the first bent portion 1121 can abut against the slider 200, so that the slider 200 is limited in the first direction Y.

In some embodiments, the slider 200 includes a boss extending into the third running track 103, the boss is provided with a claw 201, and the sunshade edge strip 602 is provided with an edge strip hole engaged with the claw 201.

Specifically, the slider 200 includes a boss extending into the third running track 103, and the claw 201 may be in the form of two hooks disposed on a lower surface of the boss. The edge strip 602 may be fitted onto the hooks through the edge strip hole. The above fitting structure not only guides the edge strip 602 into the guide rail, but also secures it in place and reduces the possibility of its disengagement.

The claw 201 may be in clearance fit with a track plane of the third running track 103. Specifically, a distance between the claw 201 and the track plane of the third running track 103 is 0.1 mm to 1.5 mm. This ensures that when the edge strip 602 is moved by the slider 200, the claw 201 will not come into contact with the guide rail body 100, thereby preventing wear and noise.

As illustrated in FIG. 8, one end of the curtain fabric (not illustrated in FIG. 8) may be provided with a pull rod 601 that may be fixed to the slider 200. When the sunshade needs to be opened or closed, a driving source drives the gears to rotate, the gears drive the timing belt 300 to move, and the timing belt 300 drives the slider 200 and the pull rod 601 to move, causing the edge strip 602 engaged with the slider 200 to move. When the pull rod 601 moves, it drives the curtain fabric to move, thereby completing the opening and closing of the sunshade. The driving source may be, but not limited to, an electric motor, and may be manually actuated.

As illustrated in FIG. 4, in some embodiments, the sunshade guide rail further includes an elastic engaging member 500 disposed between the guide rail body 100 and the slider 200 to limit the slider 200 in the second direction Z.

In this embodiment, in order to limit the slider 200 in the second direction Z, the elastic engaging member 500 may be disposed between the guide rail body 100 and the slider 200. The elastic engaging member 500 ensures an interference fit between the slider 200 and the upper rail surface 111 and the lower rail surface 112. Specifically, the elastic engaging member 500 may be disposed between the slider 200 and the upper rail surface 111. The elastic engaging member 500 may specifically be in the form of a metal elastic sheet with a certain curvature. Of course, the specific form of the elastic engaging member 500 is not limited to the above description. Other modifications can be made by those skilled in the art under the teaching of the technical spirit of the present disclosure, and shall fall within the protection scope of the present disclosure as long as the functions and effects achieved thereby are the same as or similar to those of the present disclosure.

Further, the elastic engaging member 500 may be disposed on the upper rail surface 111, and the first bent portion 1121 cooperates with the elastic engaging member 500 to limit the slider 200 in the second direction Z.

Specifically, the first bent portion 1121 includes a first portion extending in the second direction Z and a second portion extending in the first direction Y. One end of the first portion is connected to the lower rail surface 112 and the other end thereof is connected to the second portion. Specifically, the second portion of the first bent portion 1121 may cooperate with the elastic engaging member 500 to limit the slider 200 in the second direction Z. Between the first bent portion 1121 and the upper rail surface 111 provided with the elastic engaging member 500, there is no any other assembling component except the slider 200, so that the fitting accuracy is free from the influence of assembly errors, thereby enabling more reliable limitation of the slider 200.

In some embodiments, in the second direction Z, the guide rail body 100 has an upper rail surface 111 facing the slider 200, and the distal end of the upper rail surface 111 is formed with a second bent portion 113 that opens downward and outward.

In this embodiment, the second bent portion 113 may be disposed on the upper rail surface 111. The formation of the second bent portion 113 may serve, on the one hand, to create a gap for injecting adhesive between the glass and the guide rail body 100, and on the other hand, to provide a reference position for mounting and positioning in subsequent assembly.

For example, a pre-fixing portion 401 is disposed on the second bent portion 113. Specifically, the pre-fixing portion 401 may be in the form of a double-sided adhesive tape. Of course, the pre-fixing portion 401 may also be in other forms, and the present disclosure is described by taking the double-sided adhesive tape as an example.

After provided on the second bent portion 113, the double-sided adhesive tape forms an injection boundary during subsequent adhesive injection, preventing the adhesive from overflowing or even spilling onto the moving surface of the guide rail.

In the second direction Z, the guide rail body 100 has an outer surface facing the glass. An adhesive structure is disposed between the outer surface and the glass. The adhesive structure includes a main body layer 411 extending generally in the first direction Y and an extension portion 412 extending in the second direction Z.

Generally, the adhesive structure is L-shaped, which not only limits the movement of the guide rail in the first direction Y, but also protects the plastic guide rail.

At present, existing methods for securing guide rails to glass typically involve fastening with screws into embedded nuts. Since a large number of bolts are used to be fastened to the embedded nuts, this process consumes significant time at the workstation.

As illustrated in FIG. 4, in the second direction Z, the downward projection of the elastic engaging member 500 at least partially covers the first bent portion 1121, and the upward projection of the elastic engaging member 500 at least covers the second bent portion 113. As a result, the elastic engaging member 500 can be reliably pressed between the slider 200 and the guide rail body 100, while also ensuring that the slider 200 is reliably restricted in the second direction Z. Furthermore, this allows the entire guide rail structure can be kept in a state of balanced stress, thereby avoiding the problems such as uneven local stress that affects the structural strength.

The sunshade guide rail of the present disclosure is integrally formed. During assembly, the glass and the guide rail are pre-assembled, and then fixed directly by injecting PU encapsulant. The use of a PU encapsulation structure greatly improves the assembly efficiency while ensuring the assembly strength between the guide rail and the glass.

As illustrated in FIG. 3, the PU encapsulation structure may be provided with an adhesive relief port, the position of which corresponds to the notch 403 in FIG. 3. Through the cooperation between the adhesive relief port and the double-sided tape, the efficiency of adhesive injection can be improved while ensuring that the adhesive is efficiently molded at a predetermined position.

Based on the sunshade guide rail according to the above embodiments, the present disclosure further provides an assembly method for the sunshade guide rail. The method may include:
Step S11: disposing a pre-fixing portion 401 at a predetermined position on the sunshade guide rail, and pre-assembling a glass with the sunshade guide rail; and
Step S12: injecting an adhesive into a predetermined assembly gap formed between the glass and the sunshade guide rail, in which the adhesive forms a predetermined adhesive structure.

When assembling and fixing the sunshade guide rail to the glass, the present application allows for pre-fixing by providing a pre-fixing portion 401 (e.g., a double-sided adhesive tape) at a predetermined position (e.g., at the second bent portion 113), followed by pouring an adhesive (e.g., PU adhesive) to complete the fixation between the guide rail and the glass. Compared with the existing fixing method of fastening with screws into embedded nuts, the overall structure is simple and the assembly efficiency is high.

In addition, by providing the pre-fixing portion 401 (e.g., the double-sided adhesive tape), it is possible to prevent the PU adhesive from overflowing onto the moving surface of the guide rail.

By disposing the adhesive relief port in the PU encapsulation injection structure, excess adhesive from the PU encapsulation can flow out through the adhesive relief port. The adhesive structure is L-shaped, which not only limits the movement of the guide rail in the first direction Y, but also protects the plastic guide rail.

It shall be noted that in the description of the present disclosure, the terms "first", "second" and the like are used for descriptive purposes only and to distinguish similar objects, without implying any order of precedence, nor shall they be construed as indicating or implying relative importance. In addition, in the description of the present disclosure, unless otherwise specified, the term "plurality" means two or more.

The above embodiments of the present disclosure are described in a progressive manner. For the same or similar parts between the various embodiments, reference may be made to each other, and each embodiment focuses on the differences from other embodiments.

Those described above are merely several embodiments of the present disclosure. Although the embodiments of the present disclosure are disclosed as above, the contents are only adopted to facilitate the understanding of the present disclosure and are not intended to limit the present disclosure. Any person skilled in the art to which the present disclosure pertains can make various modifications and variations in the form and details of the embodiments without departing from the spirit and the scope of the present disclosure. However, the patent protection scope of the present disclosure shall still be subject to the scope defined by the appended claims.

## Claims

1. A sunshade guide rail, comprising a guide rail body extending in a longitudinal direction, the guide rail body having an inner side and an outer side opposite to each other in a first direction on a cross section thereof,
wherein a first running track and a second running track for mounting a timing belt are provided on the guide rail body at a position close to the outer side of the guide rail body; the first running track and the second running track are vertically spaced apart in a second direction perpendicular to the first direction; a third running track for mounting a sunshade edge strip is provided on the guide rail body at a position close to the inner side of the guide rail body; and
a guide structure for mounting a slider is formed in the guide rail body, and the guide structure comprises a limiting portion for limiting the slider in the first direction.

2. The sunshade guide rail according to claim 1, wherein the guide rail body is an integrally formed structure.

3. The sunshade guide rail according to claim 2, wherein in the second direction, the first running track is located above the second running track, or the first running track is located below the second running track;
in the second direction, a track depth of the first running track is greater than that of the second running track, the slider is provided with a meshing portion engaged with the timing belt, and the meshing portion is in driving engagement with the timing belt within the first running track.

4. The sunshade guide rail according to claim 3, wherein in the second direction, the first running track is located above the second running track;
the guide rail body has an upper rail surface and a lower rail surface opposite to each other in the second direction, with a partition portion bent at a predetermined angle disposed therebetween;
a portion of the partition portion cooperates with the upper rail surface to form the first running track; and
a portion of the partition portion cooperates with the lower rail surface to form the second running track.

5. The sunshade guide rail according to claim 3, wherein in the second direction, the first running track is located below the second running track;
the guide rail body has an upper rail surface and a lower rail surface opposite to each other in the second direction, with a connecting surface disposed between the upper rail surface and the lower rail surface and a partition portion disposed on the connecting surface;
the partition portion cooperates with a portion of the connecting surface and a portion of the lower rail surface to form the first running track; and
the partition portion cooperates with a portion of the connecting surface and a portion of the upper rail surface to form the second running track.

6. The sunshade guide rail according to claim 4 or 5, wherein the lower rail surface is provided with a first bent portion, and a portion of the lower rail surface cooperates with the first bent portion to form the third running track.

7. The sunshade guide rail according to claim 6, wherein the limiting portion comprises a limiting groove, and when the partition portion is a structure bent at a predetermined angle, the first bent portion cooperates with the partition portion and the lower rail surface to form the limiting groove.

8. The sunshade guide rail according to claim 6, wherein the limiting portion comprises a limiting groove, and when the partition portion is disposed on a connecting surface between the upper rail surface and the lower rail surface, the lower rail surface is further provided with a limiting member which cooperates with the first bent portion and the lower rail surface to form the limiting groove.

9. The sunshade guide rail according to claim 6, wherein when the partition portion is disposed on a connecting surface between the upper rail surface and the lower rail surface, an end portion of the partition portion away from the connecting surface cooperates with the first bent portion to form the limiting portion.

10. The sunshade guide rail according to claim 6, wherein the slider comprises a boss extending into the third running track, the boss is provided with a claw, the sunshade edge strip is provided with an edge strip hole matched with the claw, and a distance between the claw and a track plane of the third running track is 0.1 mm to 1.5 mm.

11. The sunshade guide rail according to claim 6, wherein the sunshade guide rail further comprises an elastic engaging member disposed between the guide rail body and the slider to limit the slider in the second direction.

12. The sunshade guide rail according to claim 11, wherein the elastic engaging member is disposed on the upper rail surface, and the first bent portion cooperates with the elastic engaging member to limit the slider in the second direction.

13. The sunshade guide rail according to claim 1, wherein in the second direction, the guide rail body has an upper rail surface facing the slider, and a second bent portion that opens toward the outer side is formed at a distal end of the upper rail surface.

14. The sunshade guide rail according to claim 13, wherein a pre-fixing portion is disposed on the second bent portion.

15. The sunshade guide rail according to claim 14, wherein in the second direction, the guide rail body has an outer surface facing a glass, an adhesive structure is disposed between the outer surface and the glass, and the adhesive structure comprises a main body layer extending generally in the first direction and an extension portion extending in the second direction.

16. An assembly method for a sunshade guide rail, which is applied to the sunshade guide rail according to any one of claims 1 to 15, wherein the assembly method comprises:
disposing a pre-fixing portion at a predetermined position on the sunshade guide rail, and pre-assembling a glass with the sunshade guide rail; and
injecting an adhesive into a predetermined assembly gap formed between the glass and the sunshade guide rail, wherein the adhesive forms a predetermined adhesive structure.
